(19) 

Europäisches Patentamt
European Patent Office
Office européen des brevets

(11) **EP 4 390 865 A1**

(12) **EUROPEAN PATENT APPLICATION**

(43) Date of publication:
**26.06.2024 Bulletin 2024/26**

(21) Application number: **22216476.6**

(22) Date of filing: **23.12.2022**

(51) International Patent Classification (IPC):
**G06V 10/80** (2022.01)   **G06V 10/82** (2022.01)
**G06V 10/772** (2022.01)

(52) Cooperative Patent Classification (CPC):
**G06V 10/803; G06V 10/772; G06V 10/82;**
G06V 20/588

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Moxa Inc.**
**New Taipei City 242 (TW)**

(72) Inventor: **LEE, Wei-Yu**
**242 New Taipei City (TW)**

(74) Representative: **Kurig, Thomas**
**Becker Kurig & Partner**
**Patentanwälte mbB**
**Bavariastraße 7**
**80336 München (DE)**

Remarks:
Amended claims in accordance with Rule 137(2)
EPC.

(54) **OBJECT RECOGNIZING METHOD AND OBJECT RECOGNIZING DEVICE**

(57)   The embodiments of the disclosure provide an object recognizing method and an object recognizing device (100). The method includes: obtaining (S210) a plurality of reference images (311-31N, P1, P2, 510, 520, 610, 620, 630), wherein the reference images (311-31N, P1, P2, 510, 520, 610, 620, 630) are captured by a camera, each reference image (311-31N, P1, P2, 510, 520, 610, 620, 630) includes a target object (33), and one of the camera and the target object has a moving speed higher than a first threshold; fusing (S220) the reference images (311-31N, P1, P2, 510, 520, 610, 620, 630) into a first fused image (320, P3, TS, 640); and recognizing (S230) the target object (33) corresponding to each reference image (311-31N, P1, P2, 510, 520, 610, 620, 630) via performing a first object detection on the first fused image (320, P3, TS, 640).

```
┌────────────────────────────────────────────┐
│  obtaining a plurality of reference images   │──S210
└────────────────────────────────────────────┘
                      │
                      ▼
┌────────────────────────────────────────────┐
│   fusing the reference images into a first   │──S220
│                 fused image                  │
└────────────────────────────────────────────┘
                      │
                      ▼
┌────────────────────────────────────────────┐
│  recognizing the target object corresponding to │──S230
│  each reference image via performing a first │
│    object detection on the first fused image │
└────────────────────────────────────────────┘
```

FIG. 2

**Description**

BACKGROUND

1. Field of the Invention

The present disclosure generally relates to an image processing technology, in particular, to an object recognizing method and an object recognizing device.

2. Description of Related Art

In the prior art, cameras can be disposed on fast moving vehicles (e.g., trains) for capturing images of the surrounding. For example, some cameras can be disposed at the bottom of a moving train for capturing images of the tracks on which the train moves. With these images, the status of the tracks can be analyzed/recognized by using, for example, deep learning models.

However, since the moving speed of the train is usually high (e.g., higher than 80 km/h), the image capturing rate need to be high as well (e.g., 60fps). In a case where the captured images need to be analyzed/recognized in real-time, the processing time for each image need to be less than, for example, 16.67 ms, which is difficult to be achieved with limited computing resources.

SUMMARY OF THE INVENTION

Accordingly, the disclosure is directed to an object recognizing method and an object recognizing device, which may be used to solve the above technical problems.

The embodiments of the disclosure provide an object recognizing method, adapted to an obj ect recognizing device, including: obtaining a plurality of reference images, wherein the reference images are captured by a camera, each reference image includes a target object; fusing the reference images into a first fused image, and one of the camera and the target object has a moving speed higher than a first speed threshold; and recognizing the target object corresponding to each reference image via performing a first object detection on the first fused image.

The embodiments of the disclosure provide an object recognizing method including a storage circuit and a processor. The storage circuit stores a program code. The processor is coupled to the storage circuit and accesses the program code to perform: obtaining a plurality of reference images, wherein the reference images are captured by a camera, each reference image comprises a target object, and one of the camera and the target object has a moving speed higher than a first speed threshold; fusing the reference images into a first fused image; and recognizing the target object corresponding to each reference image via performing a first object detection on the first fused image.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the disclosure.

FIG. 1 shows a schematic diagram of an object recognizing device according to an embodiment of the disclosure.
FIG. 2 shows a flow chart of the object recognizing method according to an embodiment of the disclosure.
FIG. 3 shows a schematic diagram of reference images according to an embodiment of the disclosure.
FIG. 4 shows a schematic diagram of fusing reference images according to a first embodiment of the disclosure.
FIG. 5 shows a schematic diagram of fusing reference images according to a second embodiment of the disclosure.
FIG. 6 shows a schematic diagram of fusing reference images according to a third embodiment of the disclosure.
FIG. 7 shows another flow chart of the object recognizing method according to FIG. 2.

DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

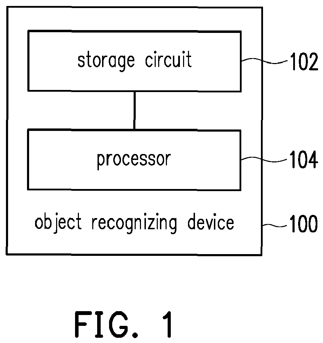

See FIG. 1, which shows a schematic diagram of an object recognizing device according to an embodiment of the disclosure. In FIG. 1, the object recognizing device 100 can be implemented in any smart device and/or computer devices. In one embodiment, the object recognizing device 100 can be integrated into the computer system of a moving vehicle (e.g., a train), but the disclosure is not limited thereto.

In FIG. 1, the object recognizing device 100 includes a storage circuit 102 and a processor 104. The storage circuit 102 is one or a combination of a stationary or mobile random access memory (RAM), read-only memory (ROM), flash memory, hard disk, or any other similar device, and which records a plurality of modules and/or program codes that can be executed by the processor 104.

The processor 104 may be coupled with the storage circuit 102, and the processor 104 may be, for example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like.

In the embodiments of the disclosure, the processor 104 may access the modules and/or program codes stored in the storage circuit 102 to implement the object recognizing method provided in the disclosure, which would be further discussed in the following.

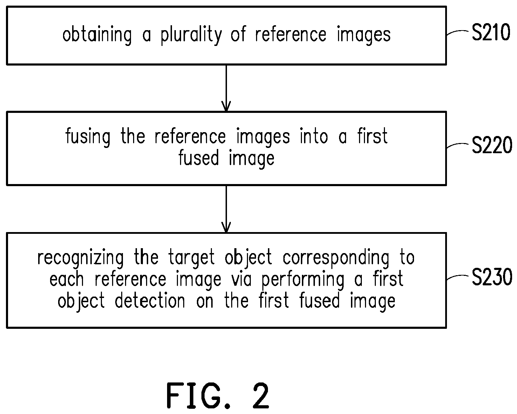

See FIG. 2, which shows a flow chart of the object recognizing method according to an embodiment of the disclosure. The method of this embodiment may be executed by the object recognizing device 100 in FIG. 1, and the details of each step in FIG. 2 will be described below with the components shown in FIG. 1.

In step S210, the processor 104 obtains a plurality of reference images, wherein the reference images are captured by a camera, each reference image comprises one or more target object, and one of the camera and the target object has a moving speed higher than a first speed threshold.

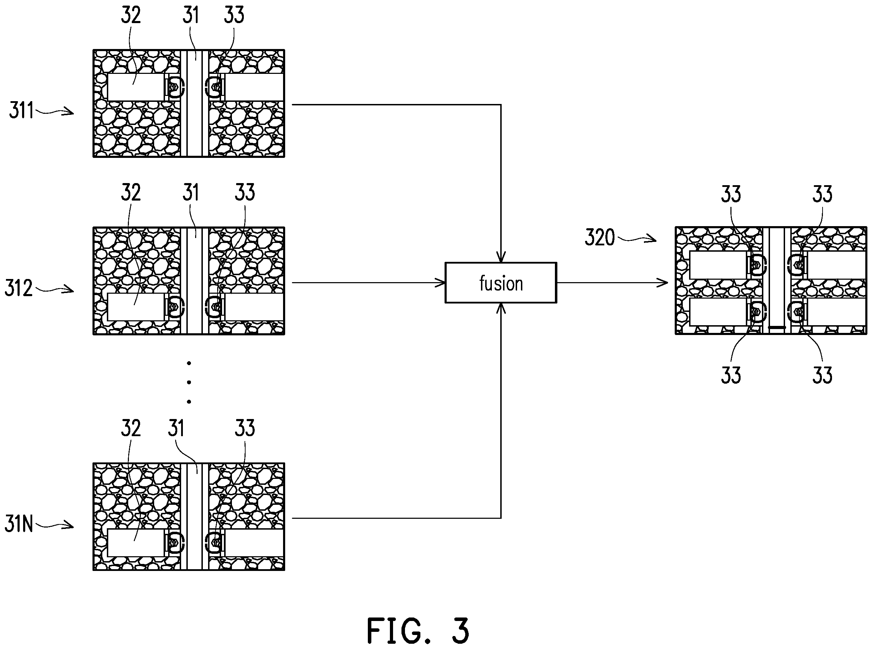

See FIG. 3, which shows a schematic diagram of reference images according to an embodiment of the disclosure. In FIG. 3, the considered camera can be disposed at the bottom of a moving train whose moving speed is higher than a first speed threshold (e.g., 80 km/h), which makes the camera also move in a moving speed higher than the first speed threshold.

In the embodiment, the camera can be used to capture images of the tracks on which the train moves as the reference images 311 to 31N, wherein each of the reference image 311 to 31N can include at least one target object (such as at the tracks 31, sleepers 32 and/or buckles 33). For better understanding the concept of the disclosure, the target object in each of the reference images 311 to 31N would be assumed to be the buckle 33 therein, but the disclosure is not limited therein.

In one embodiment, since the reference images 311 to 31N are captured by the camera, it could be understood that the reference images 311 to 31N correspond to different road sections, and the tracks 31, sleepers 32 and/or buckles 33 in each of the reference images 311 to 31N are located at the corresponding road sections.

In one embodiment, the camera may capture the reference images 311 to 31N with a configurable image capturing rate. In the scenario of FIG. 3, the image capturing rate may be 60fps, but the disclosure is not limited thereto.

In one embodiment, the camera can be connected to the object recognizing device 100 or integrated into the object recognizing device 100 for providing the captured images to the processor 104. In one embodiment, the images captured by the camera can be stored in a database, and the object recognizing device 100 may access the database to retrieve the captured images for analysis, but the disclosure is not limited thereto.

In step S220, the processor 104 fuses the reference images 311 to 31N into a first fused image 320.

In the embodiments of the disclosure, the shown reference images 311 to 31N may only be a part of the images (consecutively) captured by the camera, and the processor 104 may perform steps S210 and S220 every time N images are (consecutively) captured by the camera, wherein N may be any integer preferred by the designer (e.g., 2 or 3), but the disclosure is not limited thereto.

In various embodiments, the processor 104 can fuse the reference images 311 to 31N into the first fused image 320 in different ways, which would be introduced later.

With the first fused image 320, the processor 104 performs step S230 to recognize the target object in each reference image via performing a first object detection on the first fused image 320.

In the embodiments of the disclosure, the processor 104 may feed the first fused image 320 into any object recognizing model for recognizing the target object corresponding to each of the reference images 311 to 31N in the first fused image 320.

In one embodiment, the object recognizing model can be any deep learning model preferred by the designer, such as You only look once (YOLO) model, Faster Region Convolution Neural Network (Faster R-CNN), and/or Single Shot MultiBox Detector (SSD), but the disclosure is not limited thereto.

In the scenario of FIG. 3, since there are several target objects (e.g., four buckles 33) in the first fused image 320, the processor 104 can recognize the target objects from the first fused image 320 in a more efficient way. Accordingly, the computing effort can be reduced and the resolution can be increased.

As mentioned in the above, the reference images can be fused into the first fused image in different ways, which would be introduced in the following.

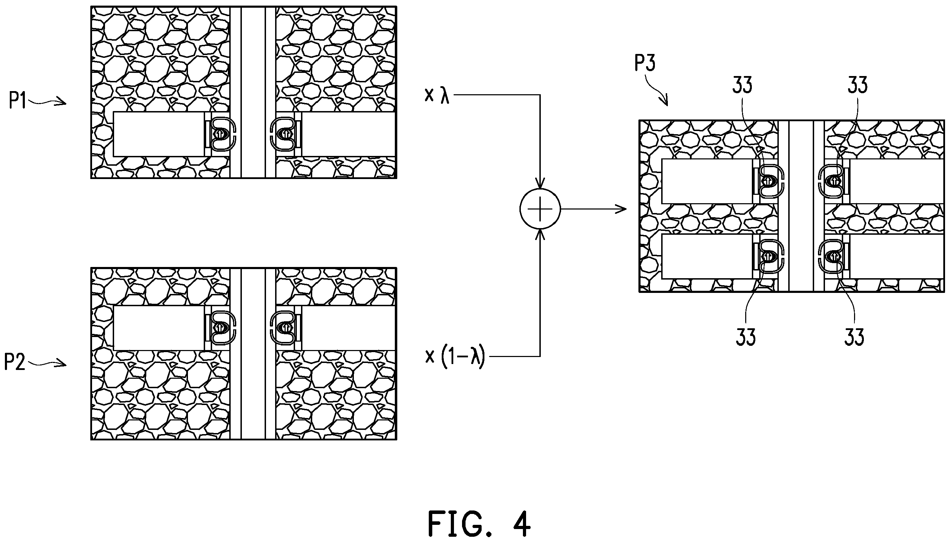

See FIG. 4, which shows a schematic diagram of fusing reference images according to a first embodiment of the disclosure. In FIG. 4, assuming the reference images P1 and P2 are to be fused, the processing 104 can linearly combine the reference images P1 and P2 into a combined image P3 as the first fused image in a pixelwise way.

In this case, the linear combination can be characterized in as "$P3 = P1 \times \lambda + P2 \times (1-\lambda)$", wherein $\lambda$ can be the weighting corresponding to the reference image P1 and can be limited to be a value between 0 and 1, but the disclosure is not limited thereto.

In other embodiments, if there are more reference images to be linearly combined into the corresponding combined image, the weightings of these reference images can be determined based on the requirements of the designer. In this case, the sum of the weighting corresponding to each reference image can be 1, but the disclosure is not limited thereto.

With the combined image P3 (i.e., the first fused image), the processor 104 can accordingly perform step S230 to recognize the target objects (e.g., the buckles 33) in the combined image P3 as taught in the above.

In one embodiment, the process of linearly combining the reference images in to the corresponding combined image can be characterized by the following equation:

$$P = \sum_{i=1}^{N} a_i \cdot P_i \quad (1)$$

, where $P_i$ is an i-th reference image of the to-be-combined reference images, $a_i$ is the weighting corresponding to the i-th reference image, N is the number of the to-be-combined reference images, P represents the first fused image, and $\sum_{i=1}^{N} a_i = 1$ . In one embodiment, the previously mentioned equation "P3=P1x$\lambda$+P2x(1-$\lambda$)" can be understood as a particular case of the equation (1) where N is 2. Specifically, P3 can be understood as P, P1 can be understood as $P_1$, P2 can be understood as $P_2$, $\lambda$ can be understood as $a_1$, and (1-$\lambda$) can be understood as $a_2$, but the disclosure is not limited thereto.

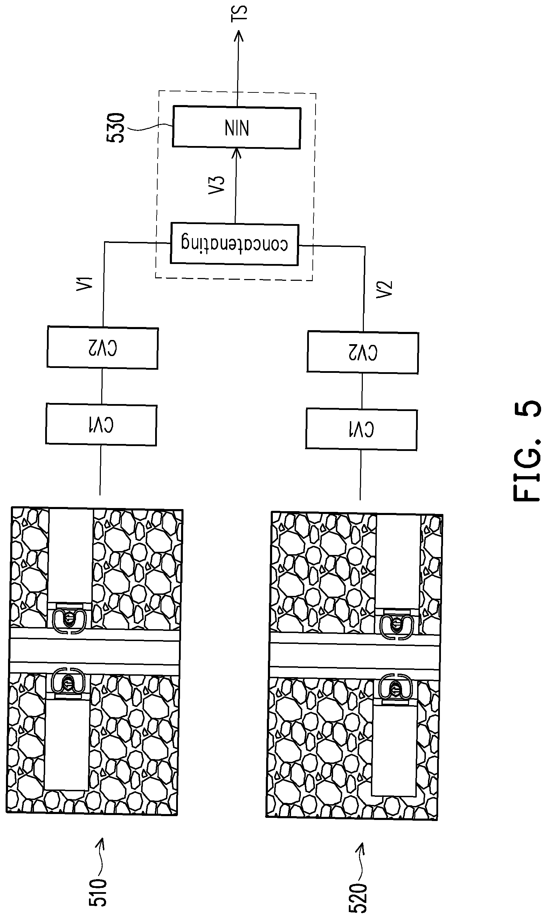

See FIG. 5, which shows a schematic diagram of fusing reference images according to a second embodiment of the disclosure. In FIG. 5, assuming the reference images 510 and 520 are to be fused, the processor 104 may feed the reference image 510 into the neural network layers CV1 and CV2 to obtain a feature vector V1 of the reference image 510.

Similarly, the processor 104 may feed the reference image 520 into the same neural network layers CV1 and CV2 to obtain a feature vector V2 of the reference image 520.

In FIG. 5, it is assumed that the dimension of the reference images 510 are both 1280x720x3, and the dimensions of the feature vector V1 and V2 may both be 1280x760x64, but the disclosure is not limited thereto.

In one embodiment, the processor 104 may fuse the feature vectors V1 and V2 into a fused tensor TS as the first fused image of the second embodiment.

In FIG. 5, the processor 104 concatenates the feature vectors V1 and V2 into a reference vector V3. In the case where the dimensions of the feature vectors V1 and V2 are assumed to be 1280x760x64, the dimension of the reference vector V3 may be 1280x720x128, but the disclosure is not limited thereto.

Afterwards, the processor 104 feeds the reference vector V3 into an NIN (network in network) 530, wherein the NIN 530 outputs the fused tensor TS in response to the reference vector V3. Details of the NIN 530 can be referred to "Lin, Min, Qiang Chen, and Shuicheng Yan. "Network in network." arXiv preprint arXiv:1312.4400 (2013)".

In one embodiment, the dimension of the fused tensor TS may be determined based on the used deep learning model in step S230. In one embodiment, assuming that the required dimension of the input vector of the deep learning model is 1280x720x3, the NIN 530 can be designed to output a vector having the dimension of 1280x720x3 as the fused tensor TS in response to the reference vector V3, but the disclosure is not limited thereto.

With the fused tensor TS (i.e., the first fused image), the processor 104 can accordingly perform step S230 to recognize the target objects based on the fused tensor TS as taught in the above.

In other embodiments, three or more reference images can be fused based on the mechanism introduced in FIG. 5. In this case, each reference image can be fed into the neural network layers CV1 and CV2 to obtain the corresponding feature vector, and the feature vector corresponding to each reference image can be fused into the corresponding fused tensor based on the descriptions in the above, which would not be repeated herein.

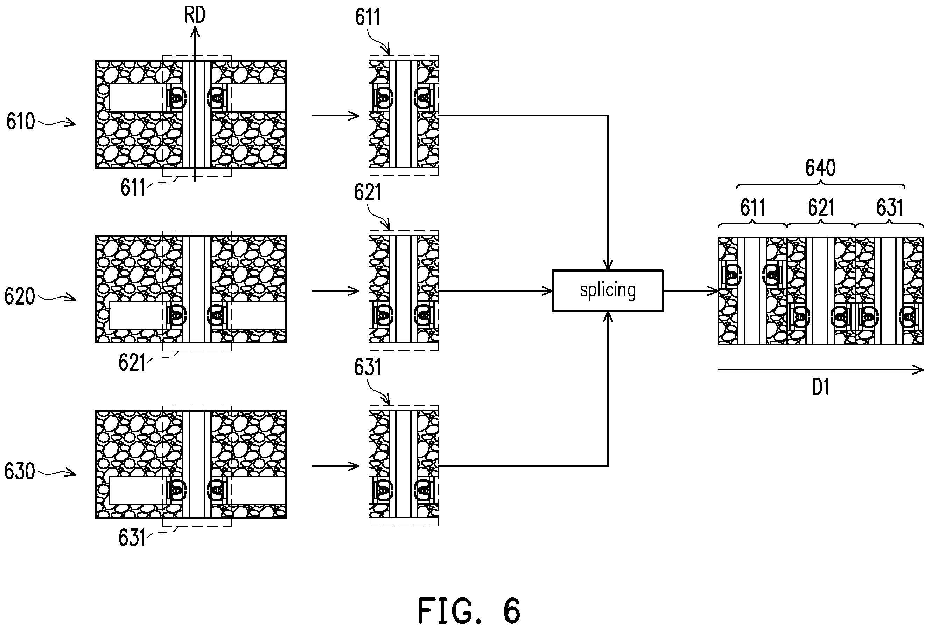

See FIG. 6, which shows a schematic diagram of fusing reference images according to a third embodiment of the disclosure. In FIG. 6, it is assumed that the reference images 610, 620, and 630 are to be fused.

In the scenario of FIG. 6, since the target objects (e.g., the tracks, sleepers, and/or buckles) in each of the reference images 610, 620, and 630 have a particular relative position with the corresponding reference image, the processor 104 may crop the image region that is more possible to cover the target object from each reference image and fuse them into the first fused image 640.

For example, since the target objects such as the tracks and buckles are known to be located near a center of each of the reference images 610, 620, and 630, the processor 104 may accordingly crop a specific image region from each reference image, wherein the specific image region may be determined based on the relative position between the target object and the corresponding reference image.

In FIG. 6, the processor 104 crops the corresponding central regions (e.g., the region labelled by dashed lines) of the reference images 610, 620, and 630 as the specific image regions 611, 621, and 631.

Next, the processor 104 can splice the specific image regions 611, 621, and 631 into the first fused image 640.

In one embodiment, the target object in each reference image has a reference direction, and the processor 104 can splice the specific image region corresponding to each reference image along a first direction into the first fused image, wherein the first direction is perpendicular to the reference direction.

In one embodiment, assuming that the target object is the track in each of the reference images 610, 620, and 630, the axial direction of the track can be regarded as the reference direction RD. In this case, the processor 104 can determine the direction perpendicular to the reference direction RD as the first direction D1 and splice the specific image regions, 611, 621, and 631 along the first direction D1.

In another embodiment, if the considered target object cannot be defined with a reference direction, the reference direction RD can be determined based on the reference object which the target object is disposed on or near. For example, assuming that the target object is the buckles in each of the reference images 610, 620, and 630, the track near the buckles can be regarded as the reference object, and the axial direction of the track can be regarded as the reference direction RD. In this case, the processor 104 can determine the direction perpendicular to the reference direction RD as the first direction and splice the specific image regions, 611, 621, and 631 along the first direction D1.

With the first fused image 640, the processor 104 can accordingly perform step S230 to recognize the target objects (e.g., the buckles) in the first fused image 640 as taught in the above.

In the embodiments of the disclosure, for facilitating the process of recognizing the target objects from the first fused image, the target object from each reference image is not overlapped with other target object in the first fused image, which can be achieved by properly determine the image capturing rate of the camera.

However, when the target object captured by the camera has a relative movement with the camera, the quality of the first fused image may be unsatisfying in some cases.

For example, when the relative speed between the target object and the camera is too low, the target object from each reference image may overlap with each other in the first fused image, which increases the difficulties of recognizing the target objects from the first fused image.

To solve this problem, the processor 104 may monitor the relative speed between the target object and the camera and determine whether the relative speed is lower than a second threshold (which is lower than the first threshold).

In one embodiment, in response to determining that the relative speed is lower than the second speed threshold, the processor 104 stops fusing the reference images into the first fused image and recognizes the target object in each reference image via performing the first object detection on each reference image.

For example, if the reference images 311 to 31N are captured in a case where the relative speed between the target object and the camera is lower than the second threshold, the processor 104 can perform the first object detection directly on each of the reference images 311 to 31N, but the disclosure is not limited thereto.

In another embodiment, in response to determining that the relative speed is lower than the second speed threshold, the processor 104 decrease the image capturing rate of the camera. In the embodiment, the image capturing rate can be decreased to a value that makes the target object from each reference image not overlapped with each other in the first fused image, but the disclosure is not limited thereto.

In one embodiment, if the relative speed is determined to become higher than the second threshold, the processor 104 can recover the fusing and/or the image capturing rate, but the disclosure is not limited thereto.

In one embodiment, the steps in FIG. 2 can be regarded as one object recognizing stage, and the method proposed by the disclosure can further include other object recognizing stages.

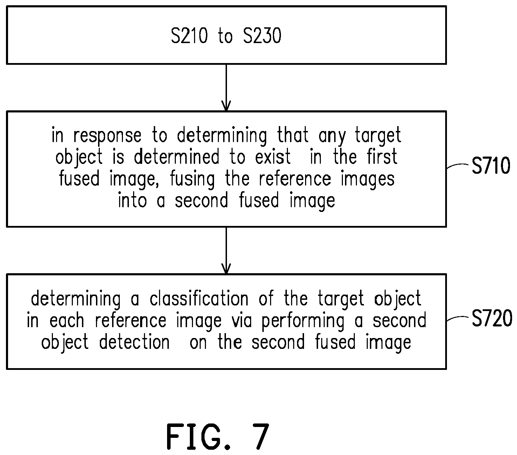

See FIG. 7, which shows another flow chart of the object recognizing method according to FIG. 2. In FIG. 7, after finishing the object recognizing stage corresponding to steps S210 to S230, the processor 104 further performs another object recognizing stage by performing steps S710 and S720.

In one embodiment, the first object detection used in step S230 can be used to determine whether any target object exists in the first fused image. Details of the first embodiment can be referred to the descriptions of FIG. 4, which would not be repeated herein.

In this case, the processor 104 can use the fusing way described in the first, second, and/or third embodiment when performing step S220 for improving the fusing efficiency, but the disclosure is not limited thereto.

In one embodiment, in response to determining that no target object exists in the first fused image, the processor 104 may ignore the first fused image, which avoids wasting computing resources on the fused images having no target object.

On the other hand, in response to determining that any target object exists in the first fused image, the processor 104 may proceed to step S710.

In step S710, in response to determining that any target object is determined to exist in the first fused image, the processor 104 fuses the reference images into a second fused image.

Next, in step S720, the processor 104 determines a classification of the target object in each reference image via performing a second object detection on the second fused image.

That is, the second object detection is used to particularly determine the classification of the target object in the second fused image. In this case, the processor 104 can use the fusing way described in the first, second and/or third embodiment when generating the second fused image in step S710 for improving the performance (e.g., accuracy) of the following second object detection in step S720, but the disclosure is not limited thereto. Details of the second and third embodiment can be referred to the descriptions of FIG. 4 to FIG. 6, which would not be repeated herein.

In one embodiment, assuming that the target object is the buckle, the second object detection can be used to determine whether the buckle is normal (e.g., properly tightened) or abnormal (e.g., loose or broken), but the disclosure is not limited thereto.

In brief, different fusing approaches can be used at different object detection stages of the method proposed in the disclosure.

In summary, the embodiments of the disclosure fuse the reference images captured by a camera (e.g., a moving camera) into a fused image and recognize the target object (e.g., a moving target object) from the fused image. Since the target objects from different reference images can be shown in the fused image, the target objects can be recognized in a more efficient way. Accordingly, the computing effort can be reduced.

**Claims**

1. An object recognizing method, adapted to an object recognizing device (100), comprising:

   obtaining (S210) a plurality of reference images (311-31N, P1, P2, 510, 520, 610, 620, 630), wherein the reference images (311-31N, P1, P2, 510, 520, 610, 620, 630) are captured by a camera, each reference image (311-31N, P1, P2, 510, 520, 610, 620, 630) comprises a target object (33), and one of the camera and the target object has a moving speed higher than a first speed threshold;
   fusing (S220) the reference images (311-31N, P1, P2, 510, 520, 610, 620, 630) into a first fused image (320, P3, TS, 640); and
   recognizing (S230) the target object (33) corresponding to each reference image (311-31N, P1, P2, 510, 520, 610, 620, 630) via performing a first object detection on the first fused image (320, P3, TS, 640).

2. The method according to claim 1, wherein the step of fusing the reference images (311-31N, P1, P2, 510, 520, 610, 620, 630) into the first fused image (320, P3, TS, 640) comprises:
   linearly combining the reference images (311-31N, P1, P2, 510, 520, 610, 620, 630) into a combined image as the first fused image (320, P3, TS, 640) in a pixelwise way.

3. The method according to claim 1, wherein the step of fusing the reference images (510, 520) into the first fused image comprises:

   feeding each reference image (510, 520) into at least one neural network layer (CV1, CV2) and accordingly obtaining a feature vector (V1, V2) of each reference image (510, 520);
   fusing the feature vector (V1, V2) of each reference image (510, 520) into a fused tensor (TS) as the first fused image.

4. The method according to claim 3, wherein the step of fusing the feature vector (V1, V2) of each reference image (510, 520) into the fused tensor (TS) as the first fused image comprises:

   concatenating the feature vector (V1, V2) of each reference image (510, 520) into a reference vector (V3);
   feeding the reference vector (V3) into a network in network, NIN, (530), wherein the NIN (530) outputs the fused tensor (TS) in response to the reference vector (V3).

5. The method according to claim 1, wherein the step of fusing the reference images into the first fused image comprises:

   cropping a specific image region (611, 621, 631) from each reference image (610, 620, 630); and
   splicing the specific image region (611, 621, 631) corresponding to each reference image (610, 620, 630) into the first fused image (640).

6. The method according to claim 5, wherein the target object (33) in each reference image has a reference direction (RD), and the step of splicing the specific image (611, 621, 631) region corresponding to each reference image (610, 620, 630) into the fused image (640) comprises:
   splicing the specific image region (611, 621, 631) corresponding to each reference image (610, 620, 630) along a first direction (D1) into the first fused image (640), wherein the first direction (D1) is perpendicular to the reference direction (RD).

7. The method according to claim 6, wherein the target object (33) is disposed on or near a reference object having an axial direction, and the method further comprises:
   determining the axial direction as the reference direction (RD).

8. The method according to any one of claims 2, 3, and 5, further comprising:

   in response to determining that any target object is determined to exist in the first fused image, fusing (S710) the reference images (311-31N, P1, P2, 510, 520, 610, 620, 630) into a second fused image;
   determining (S720) a classification of the target object (33) in each reference image (311-31N, P1, P2, 510, 520, 610, 620, 630) via performing a second object detection on the second fused image.

9. The method according to claim 8, wherein the step of fusing the reference images (311-31N, P1, P2, 510, 520, 610, 620, 630) into the second fused image comprises:

> linearly combining the reference images (311-31N, P1, P2, 510, 520, 610, 620, 630) into a combined image as the second fused image in a pixelwise way; or
> feeding each reference image (510, 520) into at least one neural network layer (CV1, CV2) and accordingly obtaining a feature vector (V1, V2) of each reference image (510, 520), and fusing the feature vector (V1, V2) of each reference image (510, 520) into a fused tensor (TS) as the second fused image; or
> cropping a specific image region (611, 621, 631) from each reference image (610, 620, 630), and splicing the specific image region (611, 621, 631) corresponding to each reference image (610, 620, 630) into the second fused image (640).

10. The method according to claim 1, wherein the target object (33) in each reference image is disposed on or near a reference object having a relative speed with the camera, and the method further comprises: in response to determining that the relative speed is lower than a second speed threshold, stop fusing the reference images (311-31N, P1, P2, 510, 520, 610, 620, 630) into the first fused image (320, P3, TS, 640) and recognizing the target object (33) in each reference image (311-31N, P1, P2, 510, 520, 610, 620, 630) via performing the first object detection on each reference image (311-31N, P1, P2, 510, 520, 610, 620, 630).

11. The method according to claim 1, wherein the target object (33) in each reference image (311-31N, P1, P2, 510, 520, 610, 620, 630) is disposed on or near a reference object having a relative speed with the camera, and the method further comprises: in response to determining that the relative speed is lower than a second speed threshold, decreasing an image capturing rate of the camera.

12. The method according to claim 1, wherein the target object (33) from each reference image (311-31N, P1, P2, 510, 520, 610, 620, 630) is not overlapped with other target object in the first fused image (320, P3, TS, 640).

13. An object recognizing device (100), comprising:

> a storage circuit (102), storing a program code; and
> a processor (104), coupled to the storage circuit (102) and accessing the program code to perform:
>
> > obtaining (S210) a plurality of reference images (311-31N, P1, P2, 510, 520, 610, 620, 630), wherein the reference images (311-31N, P1, P2, 510, 520, 610, 620, 630) are captured by a camera, each reference image (311-31N, P1, P2, 510, 520, 610, 620, 630) comprises a target object (33), and one of the camera and the target object has a moving speed higher than a first speed threshold;
fusing (S220) the reference images (311-31N, P1, P2, 510, 520, 610, 620, 630) into a first fused image (320, P3, TS, 640); and
recognizing (S230) the target object corresponding to each reference image (311-31N, P1, P2, 510, 520, 610, 620, 630) via performing a first object detection on the first fused image (320, P3, TS, 640).

**Amended claims in accordance with Rule 137(2) EPC.**

1. An object recognizing method, **characterized in** comprising:

> obtaining (S210), by an object recognizing device (100), a plurality of reference images (311-31N, P1, P2, 510, 520, 610, 620, 630), wherein the reference images (311-31N, P1, P2, 510, 520, 610, 620, 630) are captured by a camera, each reference image (311-31N, P1, P2, 510, 520, 610, 620, 630) comprises a target object (33), and the camera has a moving speed higher than a first speed threshold;
> fusing (S220), by the object recognizing device (100), the reference images (311-31N, P1, P2, 510, 520, 610, 620, 630) into a first fused image (320, P3, TS, 640); and
> recognizing (S230), by the object recognizing device (100), the target object (33) corresponding to each reference image (311-31N, P1, P2, 510, 520, 610, 620, 630) via performing a first object detection on the first fused image (320, P3, TS, 640) by feeding the first fused image (320, P3, TS, 640) into an object recognizing model.

2. The method according to claim 1, wherein the step of fusing the reference images (311-3 1N, P1, P2, 510, 520, 610, 620, 630) into the first fused image (320, P3, TS, 640) comprises:
linearly combining the reference images (311-31N, P1, P2, 510, 520, 610, 620, 630) into a combined image as the first fused image (320, P3, TS, 640) in a pixelwise way.

3. The method according to claim 1, wherein the step of fusing the reference images (510, 520) into the first fused image comprises:

> feeding each reference image (510, 520) into at least one neural network layer (CV1, CV2) and accordingly obtaining a feature vector (V1, V2) of each reference image (510, 520); fusing the feature vector (V1, V2) of each reference image (510, 520) into a fused tensor (TS) as the first fused image.

4. The method according to claim 3, wherein the step of fusing the feature vector (V1, V2) of each reference image (510, 520) into the fused tensor (TS) as the first fused image comprises:

> concatenating the feature vector (V1, V2) of each reference image (510, 520) into a reference vector (V3); feeding the reference vector (V3) into a network in network, NIN, (530), wherein the NIN (530) outputs the fused tensor (TS) in response to the reference vector (V3).

5. The method according to claim 1, wherein the step of fusing the reference images into the first fused image comprises:

> cropping a specific image region (611, 621, 631) from each reference image (610, 620, 630); and splicing the specific image region (611, 621, 631) corresponding to each reference image (610, 620, 630) into the first fused image (640).

6. The method according to claim 5, wherein the target object (33) in each reference image has a reference direction (RD), and the step of splicing the specific image (611, 621, 631) region corresponding to each reference image (610, 620, 630) into the fused image (640) comprises:
splicing the specific image region (611, 621, 631) corresponding to each reference image (610, 620, 630) along a first direction (D1) into the first fused image (640), wherein the first direction (D1) is perpendicular to the reference direction (RD).

7. The method according to claim 6, wherein the target object (33) is disposed on or near a reference object having an axial direction, and the method further comprises:
determining the axial direction as the reference direction (RD).

8. The method according to any one of claims 2, 3, and 5, further comprising:

> in response to determining that any target object is determined to exist in the first fused image, fusing (S710) the reference images (311-31N, P1, P2, 510, 520, 610, 620, 630) into a second fused image;
determining (S720) a classification of the target object (33) in each reference image (311-31N, P1, P2, 510, 520, 610, 620, 630) via performing a second object detection on the second fused image.

9. The method according to claim 8, wherein the step of fusing the reference images (311-31N, P1, P2, 510, 520, 610, 620, 630) into the second fused image comprises:

> linearly combining the reference images (311-31N, P1, P2, 510, 520, 610, 620, 630) into a combined image as the second fused image in a pixelwise way; or
> feeding each reference image (510, 520) into at least one neural network layer (CV1, CV2) and accordingly obtaining a feature vector (V1, V2) of each reference image (510, 520), and fusing the feature vector (V1, V2) of each reference image (510, 520) into a fused tensor (TS) as the second fused image; or
> cropping a specific image region (611,621,631) from each reference image (610, 620, 630), and splicing the specific image region (611, 621, 631) corresponding to each reference image (610, 620, 630) into the second fused image (640).

10. The method according to claim 1, wherein the target object (33) in each reference image is disposed on or near a reference object having a relative speed with the camera, and the method further comprises:
in response to determining that the relative speed is lower than a second speed threshold, stop fusing the reference images (311-31N, P1, P2, 510, 520, 610, 620, 630) into the first fused image (320, P3, TS, 640) and recognizing the target object (33) in each reference image (311-31N, P1, P2, 510, 520, 610, 620, 630) via performing the first object detection on each reference image (311-31N, P1, P2, 510, 520, 610, 620, 630).

11. The method according to claim 1, wherein the target object (33) in each reference image (311-31N, P1, P2, 510, 520, 610, 620, 630) is disposed on or near a reference object having a relative speed with the camera, and the method further comprises:
in response to determining that the relative speed is lower than a second speed threshold, decreasing an image capturing rate of the camera.

12. The method according to claim 1, wherein the target object (33) from each reference image (311-31N, P1, P2, 510, 520, 610, 620, 630) is not overlapped with other target object in the first fused image (320, P3, TS, 640).

13. An object recognizing device (100), comprising:

a storage circuit (102), storing a program code; and
a processor (104), coupled to the storage circuit (102) and accessing the program code to perform:

obtaining (S210) a plurality of reference images (311-31N, P1, P2, 510, 520, 610, 620, 630), wherein the reference images (311-31N, P1, P2, 510, 520, 610, 620, 630) are captured by a camera, each reference image (311-31N, P1, P2, 510, 520, 610, 620, 630) comprises a target object (33), and the camera has a moving speed higher than a first speed threshold;
fusing (S220) the reference images (311-31N, P1, P2, 510, 520, 610, 620, 630) into a first fused image (320, P3, TS, 640); and
recognizing (S230) the target object corresponding to each reference image (311-31N, P1, P2, 510, 520, 610, 620, 630) via performing a first object detection on the first fused image (320, P3, TS, 640) by feeding the first fused image (320, P3, TS, 640) into an object recognizing model.

FIG. 1

```
┌─────────────────────────────────────────────┐
│   obtaining a plurality of reference images   │──S210
└─────────────────────────────────────────────┘
                      │
                      ▼
┌─────────────────────────────────────────────┐
│   fusing the reference images into a first    │──S220
│                 fused image                   │
└─────────────────────────────────────────────┘
                      │
                      ▼
┌─────────────────────────────────────────────┐
│  recognizing the target object corresponding to │
│  each reference image via performing a first   │──S230
│  object detection on the first fused image     │
└─────────────────────────────────────────────┘
```

# FIG. 2

EP 4 390 865 A1

FIG. 3

FIG. 4

EP 4 390 865 A1

FIG. 5

FIG. 6

S210 to S230

in response to determining that any target object is determined to exist in the first fused image, fusing the reference images into a second fused image ─S710

determining a classification of the target object in each reference image via performing a second object detection on the second fused image ─S720

# FIG. 7

Europäisches
Patentamt

European
Patent Office

Office européen
des brevets

# EUROPEAN SEARCH REPORT

Application Number

EP 22 21 6476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/147287 A1 (GLOVER RAYMOND [GB]) 16 May 2019 (2019-05-16) * the whole document * | 1-9,12, 13 | INV. G06V10/80 G06V10/82 G06V10/772 |
| A | US 2022/032946 A1 (ZHAO QINGRONG [US] ET AL) 3 February 2022 (2022-02-03) * the whole document * | 1-13 | |
| A | US 2022/084234 A1 (LEE KYOOBIN [KR] ET AL) 17 March 2022 (2022-03-17) * the whole document * | 1-13 | |

TECHNICAL FIELDS
SEARCHED      (IPC)

G06V

The present search report has been drawn up for all claims

| Place of search | Date of completion of the search | Examiner |
|---|---|---|
| The Hague | 10 May 2023 | Grigorescu, Cosmin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 22 21 6476**

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2023

| Patent document cited in search report | | Publication date | Patent family member(s) | | Publication date |
|---|---|---|---|---|---|
| US 2019147287 | A1 | 16-05-2019 | NONE | | |
| US 2022032946 | A1 | 03-02-2022 | CN | 114084143 A | 25-02-2022 |
| | | | DE | 102021106685 A1 | 03-02-2022 |
| | | | US | 2022032946 A1 | 03-02-2022 |
| US 2022084234 | A1 | 17-03-2022 | KR | 20220037108 A | 24-03-2022 |
| | | | US | 2022084234 A1 | 17-03-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIN, MIN ; QIANG CHEN ; SHUICHENG YAN.** Network in network. *arXiv preprint arXiv:1312.4400,* 2013